# EUROPEAN PATENT APPLICATION

(11) **EP 3 382 555 A1**
(43) Date of publication of application: **03.10.2018**
(21) Application number: 17210147.9
(22) Date of filing: 22.12.2017
(51) Int. Cl.: G06F 11/34, G06F 11/30, H04L 12/24

(54) **SYSTEM AND METHOD FOR MANAGEMENT OF SERVICES IN A CLOUD ENVIRONMENT**

(30) Priority: 30.03.2017 IN 201741011488
(71) Applicant: Wipro Limited, 560 035 Karnataka (IN)
(72) Inventor: GUPTA, Munish Kumar, 560102 Bangalore (IN)
(74) Representative: Finnegan Europe LLP

(57) **Abstract**

System and method for management of applications and services in a cloud environment are described. The method includes receiving a plurality of configurations and rules for the plurality of services in the cloud environment. A collector is initialized based on the plurality of configurations and rules related to the plurality of services. The collector collects run time data of the plurality of services. Further, runtime data is compared with the plurality of configurations and rules. Based on the comparison an event is triggered responsive to a deviation in runtime data with respect to the plurality of configurations and rules. Furthermore, one or more actuator services are determined corresponding to the triggered event for handling the triggered event.

## Description

### TECHNICAL FIELD

The present invention in general relates to management of one or more services in a cloud environment. In particular, the present invention discloses a system for management of one or more services or applications for optimum resource utilization in the cloud environment.

### BACKGROUND

The services and/or applications executing in private cloud environments may be hindered because of a lack of flexible resource scaling, and service and/or application failure because of unavailability of resources. It is difficult for an operator to monitor the resource usage by services. It is also difficult to monitor the service failures due to non-availability of resources.

The services and/or applications running in the cloud environments have to be monitored to determine resource usage. When there is a change in resource usage, that is, an increase or decrease in resource usage, the resources have to be either allocated or de-allocated respectively. Similarly, the services might have started with set of configurations and, after a while, there is a change in configuration. To accommodate such change in a configuration there is a need for a system which could re-launch the service with new configuration.

In some scenarios, certain resources are unavailable and the services are abruptly terminated. There is a need for a system to monitor such failures and ensure the availability of required resources or alternate resources. It is with respect to these considerations and others that the invention has been made.

### SUMMARY

One or more shortcomings of the prior art are overcome and additional advantages are provided through the present disclosure. The techniques of the present disclosure enable realization of additional features and advantages. Other embodiments and aspects of the disclosure are described in detail herein and are considered a part of the claimed disclosure.

Disclosed herein is a method of management of a plurality of services in a cloud environment, the method comprising, receiving, by a cloud monitoring system, a plurality of configurations and rules for a plurality of services in the cloud environment. The method further includes initializing, by the cloud monitoring system, at least a collector, based on the plurality of configurations and rules related to the plurality of services. The collector collects run time data of the plurality of services. The method further includes comparing, by the cloud monitoring system, runtime data with data corresponding to a plurality of configurations and rules. Based on the comparison an event is triggered responsive to a deviation in runtime data, with respect to the plurality of configurations and rules. The method further includes determining, by the cloud monitoring device, one or more actuator services corresponding to the triggered event for handling the triggered event.

In another embodiment, a system for management of plurality of services in a cloud environment is disclosed. The system includes a memory and a processor coupled to the memory, the processor executing an application. The processor is configured to receive a plurality of configurations and rules for a plurality of services in the cloud environment. The processor is further configured to initialize at least a collector, based on the plurality of configurations and rules related to the plurality of services. The collector collects run time data of the plurality of services. The processor is further configured to compare runtime data with data corresponding to a plurality of configurations and rules. Based on the comparison an event is triggered responsive to a deviation in runtime data, with respect to the plurality of configurations and rules. The processor is further configured to determine one or more actuator services corresponding to the triggered event for handling the triggered event.

In yet another embodiment, a non-transitory computer-readable medium storing computer-executable instructions for adapting a display on an electronic device is disclosed. In one example, the stored instructions, when executed by a processor, cause the processor to perform operations that include receiving a plurality of configurations and rules for a plurality of services in the cloud environment. The operations further include initializing at least a collector, based on the plurality of configurations and rules related to the plurality of services. The collector collects run time data of the plurality of services. The operations further include comparing runtime data with data corresponding to a plurality of configurations and rules. Further, based on the comparison an event is triggered responsive to a deviation in runtime data, with respect to the plurality of configurations and rules. The operations further include determining one or more actuator services corresponding to the triggered event for handling the triggered event.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. Some embodiments of system and/or methods in accordance with embodiments of the present subject matter are now described, by way of example only, and with reference to the accompanying figures, in which:
**FIG. 1** shows a schematic block diagram of a network environment of a system for management of services in a cloud environment, in accordance with some embodiments of the present disclosure.
**FIG. 2** shows a schematic block diagram of system for management of services in a cloud environment in accordance with some embodiments of present disclosure.
**FIG. 3** shows a flowchart illustrating a method of management of services in a cloud environment.
**FIG. 4** shows a block diagram of an exemplary computer system for implementing embodiments consistent with the present disclosure.

It should be appreciated by those skilled in the art that the block diagrams herein represent conceptual views of illustrative systems embodying the principles of the present subject matter. Similarly, it will be appreciated that any flow charts, flow diagrams, state transition diagrams, pseudo code, and the like represent various processes that may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a system and method for management of applications and services in a cloud environment. One or more applications or services in a (public or private) cloud environment have varied resource usage. Resource unavailability would hinder the performance of services, and the service may suffer failures due to non-availability of resources. This invention discloses a system that monitors the services for their resource usage, and scales-up or scales-down the resources as required. In addition, when the one or more services and/or applications have failed due to non-availability of resources, the system revives the one or more services and/or applications.

In an implementation, an application and/or service is deployed in a cloud computing environment on a cloud server using an application deployment tool. A system monitors computing resources associated with the one or more services and/or application. Some nonlimiting examples of computing resources which may be monitored include software resources (such as file utilities), storage resources (for example, disk drives, magnetic tapes, etc.), network resources, memory resources, and processing resources associated with the one or more services and/or application. For example, consider a scenario wherein multiple copies of a web applications and/or services are hosted on a plurality of cloud servers along with a load balancer to manage workloads and a database for storing processing or other related data. In such case, the system may monitor the services for their usage of computing resources such as CPUs, memory units, network I/O interfaces etc. associated with the computer application and/or service, load balancer and database.

Such a system for monitoring services comprises a controller for managing and orchestrating plurality of components such as a collector, a plurality of bots and an actuator service. The system further comprises a configurer, which provides an interface to an administrator to enter the plurality of services to be monitored. The administrator defines the plurality of services to be monitored. The plurality of services are stored in the service registry. The administrator also defines configurations and rules for the plurality of services. The configurations and the rules are stored in a meta-data store. The configurer also provides an interface to view, modify or delete the configurations and rules. The administrator uses this interface to view, modify or delete the configurations and rules.

In order to monitor the services, the system initializes the controller. The controller reads the plurality of services from the service registry and the associated configurations and rules from the meta-data store. The controller then initializes the collector, the plurality of bots and the actuator services by passing the plurality of services, associated configurations and rules. The collector component is initialized for runtime data pulling jobs. The plurality of bots are initialized to monitor the runtime data collected by the collector. The plurality of bots compare the runtime data received from the collector with the configurations and rules from meta-data store. The bot determines any deviation in the collected runtime data and triggers an event. In order to intercept the triggered event, the controller periodically performs polling. Based on the polling, the controller invokes a matching actuator service. The actuator service handles the triggered event.

The plurality of services typically run inside a service container. The service container has plurality of Uniform Resource Locator (URL) end points, which publish the running data related to the performance of the service. The service container interfaces publish information to plurality of Uniform Resource Locator (URL) end points. The collector comprises an interface to read the runtime data published by the service container. An application log agent uses the collector's interface to write data to collector. The application log agent tracks the plurality of URL end points for new entries and reads the entries and converts the runtime data into JavaScript Object Notation (JSON) format and writes into a local storage. Another thread reads the local storage, picks a bundle of messages, invokes the collector's interface, and passes the read data. The read runtime data that has been successfully posted to the collector is removed from the local storage.

Apart from collecting runtime data from the service container, the collector also collects runtime data from a service proxy load balancer. The service proxy load balancer is generally provided as part of a cloud infrastructure such as Amazon Web Service (AWS) Elastic Load Balancer (ELB) or it can be a third party component such as Netflix Ribbon. The runtime data from the service proxy load balancer typically comprises service and/or application metrics. The service and/or application metrics which are published by the service proxy load balancer, comprise, but not limited to, web service statistics like Hyper-Text Transport Protocol (HTTP) throughput, HTTP request/response size, latency etc. The data metrics are published at an aggregate level such as a mean rate, 1-minute rate, 5-minute rate, 15-minute rate etc.

The collector stores the runtime data received from the service container and the service proxy load balancer in a data store. The controller then deploys the bots for monitoring the services. The bots read the runtime data from the data store and read the configurations and rules from the meta-data store to determine deviations. The deviations may typically be, by way of example, a change in the availability, performance, security, or other factor related to a computing resource. Upon detecting a deviation, the bots may trigger an event.

The controller intercepts the event and deploys a matching actuator service to handle such event.

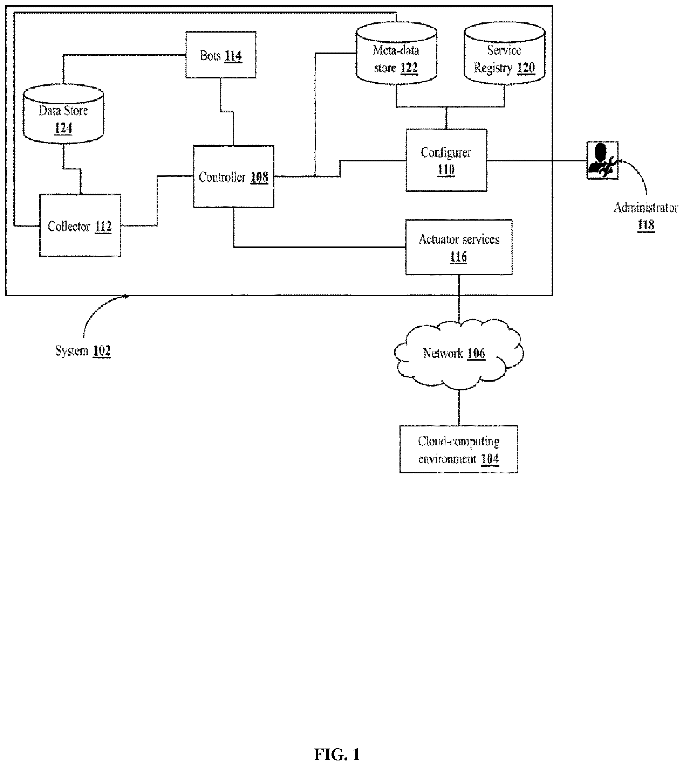

**FIG. 1** illustrates a system **102** for management of services in a cloud environment and a cloud-computing environment **104.** The system **102** and cloud-computing environment **104** are coupled over a network **106.**

The system **102** for management of applications and services in a cloud environment comprises components such as controller **108,** configurer **110,** collector **112,** plurality of bots **114** and actuator services **116.** In an implementation, the system **102** may be present on a host computer system, which, by way of example, may be a computer server, desktop computer, notebook computer, tablet computer, mobile phone, personal digital assistant (PDA), or the like. The host computing system may include a processor for executing machine-readable instructions and a memory (storage medium) for storing machine-readable instructions. Although in the present illustration, the system **102** and cloud-computing environment **104** are shown as distinct components. However, in another implementation, the system **102** may be a part of cloud-computing environment **104.**

The configurer **110** provides an interface for an administrator **118** to enter a plurality of services and/or applications for monitoring. The plurality of services and/or applications are referred to hereafter as a plurality of services. The configurer **110** stores the plurality of services defined by the administrator **118** in the service registry **120.** The configurer **110** also enables the administrator **118** to define configurations and rules for the plurality of services. The configurations and rules are stored in the meta-data store **122.** The configurer **110** also provides a visual interface to add, delete or modify the configurations and rules.

In one embodiment, the configurer **110** also allows the administrator **118** to choose from a pre-configured list of plurality of bots **114** for monitoring each of the plurality of services. For example, to handle an auto-scaling functionality an auto-scaling bot **114** is selected. The auto-scaling functionality involves allocating or de-allocating the resources used by the plurality of services, based on the requirement. In another embodiment, the selection of bot **114** may be automated. The administrator **118** may also define the scheduling frequency for the plurality of bots **114.** The administrator **118** may also define the plurality of events to be generated for each type of determined deviation. The administrator **118** may define the plurality of actuator services **116** to handle the plurality of events. The administrator **118** may also configure the plurality of bots **114** and actuator services **116** via configurer **110.** The administrator **118** may also define time events via the configurer **110.** These time events may be triggered based on the defined time parameters. The configurer **110** communicates these time events to the controller **108** on periodic basis. The configurer **110** automatically builds the interdependencies between the plurality of services and write it to the meta-data store **122.**

In order to monitor the services, the controller **108** reads the plurality of services from the service registry **120** and the associated configurations and rules from the meta-data store **122.** The controller **108** then initializes the collector **112** for data pulling jobs by passing on the plurality of services, the configuration and the rules. The controller **108** also initializes the plurality of bots **114** and the actuator services **116** using the plurality of services, the associated configurations and rules from the meta-data store **122.** The plurality of bots **114** are initialized by passing in the plurality of services, periodic scheduling frequency in addition to configurations, rules and events that may trigger on identifying the deviation from the configurations and rules. The actuator services **116** are initialized to handle events raised by the plurality of bots **114.**

The configurer **110** keeps track of the changes in the configurations and rules after the initialization of collector **112,** the plurality of bots **114** and the actuator services **116.** The configurer **110** notifies the controller **108** of any such changes in configurations and rules. The controller **108** may refresh the collector **112,** the plurality of bots **114** and the actuator services **116** with the new configurations and rules. The controller **108** supervises and manages the collector **112,** the plurality of bots **114** and the actuator services **116** for any failures and takes appropriate action to revive them. The collector **112** collects runtime data of the plurality of services and stores in the runtime data store **124.** The plurality of bots **114** which are initialized by the controller **108** read runtime data from the data store **124.** The plurality of bots **114** compare the runtime data read from data store **124** with configurations and rules of the plurality of services stored in meta-data store **122.** Each of the plurality of bots **114** are defined for a specific function, for example, for handling the auto-scaling functionality an auto-scaling bot **114** may be defined. One bot **114** may handle multiple services at any given point of time. Based on the number of services to be monitored, the bot **114** would generate such number of instances, for example, to monitor five services for auto-scaling, five instances of auto-scaling bots **114** are initialized. The bots **114** may monitor the plurality of services for failure and generate an event. The plurality of bots **114** trigger a configuration event if a change in configuration is detected. The plurality of bots **114** compare the data from data store **124** with the rules from meta-data store **122** to assess the performance. The plurality of bots **114** may trigger a rule event when there is any deviation in the rule.

The controller **108** may intercept the events generated by the plurality of bots **114.** The controller **108** may assess the type of events to determine the action; the controller **108** may also determine the number of times a specific event has occurred. The controller **108** may also assess the impact of such event on the service and determines the priority of the event. The controller **108** then invokes corresponding actuator services **116** for handling the events. The controller **108** may also monitor the functioning of the bots **114** and actuator services **116.** The controller **108** would relaunch the bots **114** and actuator services **116** when there is any failure with respect to the bots **114** or actuator services **116.**

The actuator service **116** is invoked by the controller **108** to handle the event. The actuator service **116** launches a new service in the cloud-computing environment **104** in response to the event or re-launch the service in the cloud-computing environment **104** with a new configuration in response to the event.

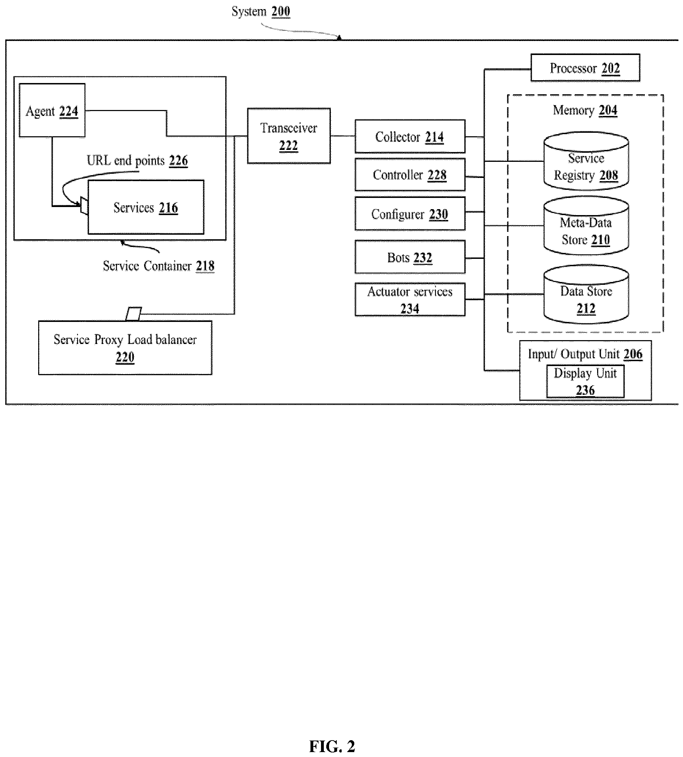

**FIG. 2** is a block diagram of exemplary system for monitoring services and applications in a cloud environment, in accordance with some embodiments of the present disclosure the system **200** may include one or more processors, such as a processor **202,** a memory **204** and an input/ output (I/O) unit **206.** The processor **202** may be communicatively coupled to the memory **204** and the I/O unit **206.**

The processor **202** may include suitable logic, circuitry, interfaces, and/or code that may be configured to execute a set of instructions stored in the memory **204.** The processor **202** may be configured to execute a set of instructions stored in memory **204.** The processor **202** may be configured to monitor the services and applications in the cloud environment by execution of one or more modules stored in the memory **204.** Examples of processor **202** may be an X86-processor, a Reduced Instruction Set Computing (RSIC) processor, an Application-Specific Integrated Circuit (ASIC) processor, a Complex Instruction Set Computing (CSIC) processor, and/ or other processors.

The memory **204** may include suitable logic, circuitry, and/or interfaces that may be configured to store a machine code and/ or computer program with at least one code section executable by the processor **202.** In an embodiment, the memory **204** may be configured to store services **216** to be monitored in a service registry **208.** Further, the memory **204** may also be configured to store the configurations and rules with respect to the services **216** to be monitored in a meta-data store **210.** Further, the memory **204** may be configured to store the runtime data collected from the services **216** and applications in a data store **212.** Examples of implementation of memory **204** may include, but are not limited to, Random Access Memory (RAM), Read Only Memory (ROM), Hard Disk Drive (HDD), and/ or a Secure Digital (SD) card.

The I/O unit **206** may include suitable logic, circuitry, interfaces, and/or code that may be configured to receive inputs from the administrator about the services **216** to be monitored. The I/O unit **206** may also receive inputs about the configurations and rules with respect to the services **216.** The I/O unit **206** may include various input and output devices that may be configured to communicate with the processor **202.** The system may display one or more interfaces to the administrator via a display unit **236.**

The system further comprises a collector **214.** The collector **214** may include suitable logic, circuitry, interfaces, and/or code that may be configured to read runtime data with respect to services **216.** The collector **214** reads the runtime data from service container **218** and service proxy load balancer **220.** The collector **214** is communicatively coupled to service container **218** and service proxy load balancer **220** via transceiver **222.**

The service container **218** may include suitable logic, circuitry, interfaces, and/or code that may be configured to publish runtime data of the services **216.** The service container **218** is configured to publish runtime data related to, but not limited to, metrics, logs, health, and business services of services **216** at plurality of URL end points **226.** In the agent-based solution, a software module called agent **224** is installed on each Information Technology (IT) system (for example, a server) that is to be monitored. The agent **224** may be configured to collect data depending on the plurality of applications and/or services **216** and the hardware profile of the IT system. The functionality of the agent **224** also extends to storing of collected data locally.

The service container **218** publishes runtime data to the plurality of URL end points. The agent **224** reads the runtime data from plurality of URL end points **226.** The agent **224** tracks the plurality of URL end points **226** for new entries and reads the entries and converts the runtime data into JSON format and writes into a local storage. Another thread reads the local storage, picks a bundle of messages and invokes the collector **214** and passes the read runtime data. The read runtime data which has been successfully posted to the collector **214** is removed from the local storage.

The plurality of URL end points **226** may have runtime data related to, but not limited to, metrics, logs, health, and business services. The URL end points **226** may comprise service statistics such as HTTP Throughput, HTTP request/response size, and/or latency etc., which may be provided at an aggregate level such as a mean rate, one-minute rate, five-minute rate, fifteen-minute rate etc.; Java Virtual Machine (JVM) statistics such as Heap size, CPU utilization, memory utilization, garbage collector metrics, and/or thread count etc.; container statistics such as overall CPU utilization, memory utilization, disk read/write, network I/O, current IP, and/or port opened etc.. The logs may comprise the data from the application and/or service instance such as application exceptions, application logs, system logs (syslogs) are collated across the application and services. The health URL end point may comprise application runtime - application configuration (e.g. database connection details, cache details, dependency flags etc.) dependency component health information (e.g if Service A depends on Service X and Service X is not working, Service A should fail fast and provide the overall health status). The business services comprises the business functionality information published at regular intervals.

The service proxy load balancer **220** may either be provided as part of the cloud infrastructure (e.g. Amazon Web Services Elastic Load Balancer - AWS ELB) or build using a 3rd party component (Netflix Ribbon) or custom component. The service proxy load balancer **220** exposes URL end point and publishes runtime data such as, but not limited to, service statistics like HTTP Throughput, HTTP request/response size, latency etc. All the data is published at an aggregate level like - mean rate, one-minute rate, five-minute rate, fifteen-minute rate etc.

In one embodiment, components **216-226** may be a part of the system **200** as shown in **FIG. 2****.** In another embodiment, the components **216-226** may be a part of a remote system.

The controller **228** may include suitable logic, circuitry, interfaces, and/ or code that may be configured to adapt the orchestration of the other components such as collector **214,** bots **232** and actuator services **234.** The controller is communicatively coupled to the processor **202,** memory **204** and I/O unit **206.** The controller monitors the performance of the collector **214,** plurality of bots **232** and actuator services **234.**

The configurer **230** may include suitable logic, circuitry, interfaces, and/ or code that may be configured to provide an interface to the administrator **118** for receiving the services **216** to be monitored. The configurer **230** also provides an interface to the administrator **118** to receive the configurations and rules associated with the services **216.** The configurer **230** is communicatively coupled to the processor **202,** memory **204** and I/O unit **206.**

By way of example, but not limited thereto, the configurations and rules may be with respect to the number of service instances running, heap size, ways of handling the error messages and time based models. The configurations and rules in relation to instances may be minimum number of service instances to be running at any given point of time, maximum number of service instances to be running, time lag between services instances going up or down, service instance increment size (one or two or more). The configurations and rules in relation to heap size may be min heap size, max heap size, and heap increment counter size. The configurations and rules for handling error messages may be a) defining the size of additional storage that need to be attached on encountering a disk full error message and, b) defining alternate data source in case main data source is unavailable or down etc. The configurations and rules for time based model may be defining the schedule for running the instances of a service at a time of a day, week, month etc. or killing the instances of the service at a time of a day, week, month etc.

The configurer **230** keeps track of the changes in the configurations and rules after the initialization of collector **214,** the plurality of bots **232** and the actuator services **234.** The configurer **230** notifies the controller **228** of any such changes in configurations and rules. The controller **228** may refresh the collector **214,** the plurality of bots **232** and the actuator services **234** with the new configurations and rules. The controller **228** supervises and manages the collector **214,** the plurality of bots **232** and the actuator services **234** for any failures and takes appropriate action to revive them.

The plurality of bots **232** may include suitable logic, circuitry, interfaces, and/or code that may be configured to monitor the services **216.** The plurality of bots **232** are communicatively coupled to the processor **202,** memory **204** and I/O unit **206.** The plurality of bots **232** may compare the data obtained from the services **216** with the configurations and rules from the meta-data store **210.** The plurality of bots **232** are further configured to trigger events on determining deviation.

The actuator services **234** may include suitable logic, circuitry, interfaces, and/or code that may be configured to handle the events triggered by the plurality of bots **234.** The actuator service **234** launches a new service in response to the event or re-launch the service with a new configuration in response to the event.

In operation, the system via the processor **202** initializes the configurer **230** to receive information on the services **216** to be monitored. The configurer **230** provides an interface for an administrator **118** to enter services **216** for monitoring. The configurer **230** stores the services **216** defined by the administrator **118** in the service registry **208.** The configurer **230** also enables the administrator **118** to define configurations and rules for the services **216.** The configurations and rules are stored in the meta-data store **210.** The configurer **230** also provides a visual interface to add, delete or modify the configurations and rules.

In one embodiment, the configurer **230** also allows the administrator **118** to choose from a pre-configured list of plurality of bots **232** for monitoring each of the services **216.** For example, to handle an auto-scaling functionality an auto-scaling bot **232** is selected. The auto-scaling functionality involves allocating or de-allocating the resources used by the services **216,** based on the requirement. In another embodiment, the selection of bot **232** may be automated. The administrator **118** may also define the scheduling frequency for the plurality of bots **232.** The administrator **118** may also define the plurality of events to be generated for each type of determined deviation. The administrator **118** may define the plurality of actuator services **234** to handle the plurality of events. The administrator **118** may also configure the plurality of bots **232** and actuator services **234** via configurer **230.** The administrator **118** may also define time events via the configurer **230.** These time events may be triggered based on the defined time parameters. The configurer **230** communicates these time list events to the controller **228** on periodic basis. The configurer **230** builds the interdependencies between the services **216** and write it to the meta-data store **210.**

In one embodiment, the system handles the interdependencies between the services **216.** Each of the plurality of services are identified by a unique correlation ID. The correlation ID may be propagated downstream across the dependent service instances. The system builds a service and/or application visualizer map using this correlation IDs. The system enables identification of service and/or application dependencies at system level and user level.

For monitoring, the services **216** listed in the service registry **208** the processor **228** initializes the controller **228.** The controller **228** may read the services **216** from the service container **218.** The controller **228** may also read the configurations and rules from the meta-data store **210** associated with the services **216.** The controller **228** then allows the processor **202** to initialize the collector **214,** plurality of bots **232** and actuator services **234** based on the configurations and rules from the meta-data store **210.**

The processor **228** upon initializing the controller **228,** initializes the collector **214.** The collector **214** upon initialization reads runtime data related to one or more services **216** from plurality of URL end points **226** of the service container **218** and the service proxy load balancer **220.** The plurality of URL end points may have runtime data related to, but not limited to, metrics, logs, health, and business services. The collector **214** collects the runtime data from service container **218,** via the agent **224.** The agent **224** may be configured to collect runtime data depending on the application and/or service and the hardware profile of the IT system. The functionality of the agent **224** also extends to storing of collected data locally. The collector **214** accesses the agent **224** via an interface to read the collected runtime data. The collector stores the collected runtime data in the data store **212.**

The plurality of bots **232** may periodically read the runtime data with respect to one or more services **216** from the data store **212** and compare the runtime data with the configurations and rules from the meta-data store **210.** The plurality of bots **232** may monitor the runtime data for any deviations with respect to configurations and rules read from the meta-data store **210.** The plurality of bots **232** may trigger an event upon determining the deviation. The plurality of bots **232** may trigger a configuration event, when a deviation in the configuration is determined and a rule event, when a deviation in the rule is determined.

The configuration event may be triggered, when there is a deviation in the configuration. For example, when the service was initially configured, it might have been set to run five instances, later, the configuration has been changed to run three instances. In this case, a configuration event is triggered as there is a deviation in the configuration. Similarly, a rule event may be triggered when the resource utilization is high or low, or when a file is missing, or when a service cannot function due to non-fulfillment of interdependency of one service by another service. The plurality of bots **232** may identify such deviations and generate a rule event.

The controller **228** may be polling periodically for intercepting any events generated by the plurality of bots **232.** The controller **228** then intercepts the events generated by the plurality of bots and identifies the matching actuator services **234** to handle the events. The matching actuator service **234** then handles the triggered event.

For example, if the service has failed because of out of memory issue, then the bot **232** identifies the failure and generates an event. The generated event is intercepted by the controller **228.** The controller **228** then invokes an actuator service **234** to handle the event. The actuator service **234** checks for the heap size of the service in the meta-data store **210.** If the current heap size of the service in the meta-data store **210** is less than the defined upper heap limit, then the actuator service **234** may start a new instance with incremented heap size. The actuator service **234** launches a new service in response to the event or re-launch the service with a new configuration in response to the event based on the type of event triggered. For example, if the triggered event is a rule event, the actuator service **234** launches a new service in the cloud-computing environment **104** by suspending the current service and if the triggered event is a configuration event, the actuator service **234** re-launches the same service in the cloud-computing environment **104** with a new configuration.

By way of example, but not limited thereto, the system handles the system failures such as a) disk full error message by estimating the additional storage that need to be attached, b) accessing alternate data source when a main data source is not accessible, c) Monitoring heap utilization and garbage collection passes for unwanted memory leakages, d) traffic overload by adding additional services.

In one embodiment, the system tracks the service invocation for a given user session using correlation IDs and track for any over resource utilization or suspicious activities across service instances and use that to identify fraudulent activities.

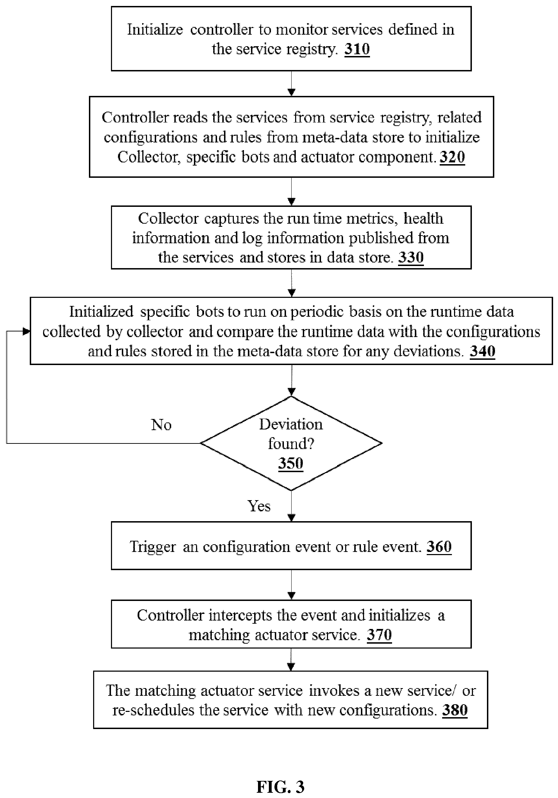

**FIG. 3** is a flow diagram illustrating a method for monitoring services in a cloud environment. As shown, the method starts at step **310,** where the controller **228** is initialized for monitoring the services **216** listed in the service registry **208.**

At step **320,** controller **228** reads the services **216** to be monitored from the service registry **208.** The controller **228** then initializes the collector **214** to collect data from the services **216.**

At step **330,** the collector **214** retrieves the data from the service container **218** and the service proxy load balancer **220.** The service container **218** comprises plurality of URL end points **226** where data such as metrics, logs, health, and business services records is published. The collector **214** has an interface to read the data from the service container **218** and the service proxy load balancer **220.** The collector **214** opens an interface for the agent **224** to write in the runtime data. The agent **224** reads the runtime data from the plurality of URL end points of the service container **214.** The service proxy load balancer **220** also publishes runtime data at its URL end point. The controller **228** reads the runtime data from the URL end point of service proxy load balancer **220.** The data collected by the collector **214** is stored in the data store **212.**

At step **340,** the specific bots **232** initialized by the controller **228** in step **320** retrieve the runtime data from data store **212** and compare the retrieved runtime data with the configurations and rules from the meta-data store **210.**

At step **350,** the assessment for deviation is performed. If there is any deviation in the runtime data with respect to configurations a configuration event is generated, and if there is any deviation in the runtime data with respect to rules, then a rule event is generated at step **360.** When the services **216** are assessed for deviation in configuration and if any change in configuration is found, the configuration event is generated, similarly, when the services **216** are assessed with respect to the rules and if there is any deviation in the data with respect to the rules a rule event is generated. When there is no deviation, then control goes back to step **340** where, the plurality of bots **232** may continue to assess the data from the data store **212.**

At step **370,** the controller **228** intercepts the triggered event. The controller **228** assesses the type of event to determine the action; the controller **228** may also determine the number of times a specific event has occurred. The controller **228** further assesses the impact of such event on the service and determines the priority of the event. The controller **28** then invokes corresponding actuator services **234** for handling the events.

At block **380,** the actuator service **234** may handle the triggered event. If the trigged event is a rule event, then the actuator service **234** suspends the current service and launches a new service after handling the event. If the triggered event is a configuration event then the actuator service **234** re-launches the service with a new configuration.

### Computer System

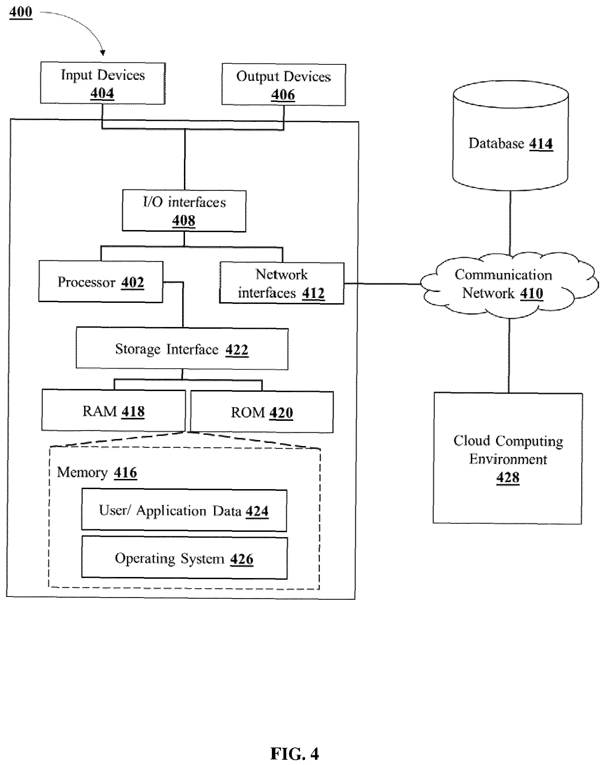

**FIG. 4** illustrates a step diagram of an exemplary computer system **400** for implementing embodiments consistent with the present invention. In an embodiment, the computer system **400** can be the central computer system of the system **102** for load-aware auto scale, self-healing and resiliency scheme. The computer system **400** may comprise a central processing unit ("CPU" or "processor") **402.** The processor **402** may comprise at least one data processor for executing program components for executing user-generated or system-generated business processes. The processor **402** may include specialized processing units such as integrated system (bus) controllers, memory management control units, floating point units, graphics processing units, digital signal processing units, etc.

The processor **402** may be disposed in communication with one or more input/output (I/O) devices **(404** and **406)** via I/O interface **408.** The I/O interface **408** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc.

Using the I/O interface **408,** the computer system **400** may communicate with one or more I/O devices **(404** and **406).**

In some embodiments, the processor **402** may be disposed in communication with a communication network **410** via a network interface **412.** The system 402 communicates with the cloud-computing environment **428** over the communication network **410.** The network interface **412** may communicate with the communication network **410.** The network interface **412** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. The communication network **410** can be implemented as one of the different types of networks, such as intranet or Local Area Network (LAN) and such within the organization. The communication network **410** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **410** may include a variety of network devices, including routers, bridges, servers, computing devices, storage devices, etc. Further, the database **414** may include, but not limited to, clinical sources, hospice item set (HIS), legacy system, social media etc.

In some embodiments, the processor **402** may be disposed in communication with a memory **416** (e.g., RAM **418,** ROM **420,** etc. as shown in **FIG. 7**) via a storage interface **422.** The storage interface **422** may connect to memory **416** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **416** may store a collection of program or database components, including, without limitation, user/application data **424,** an operating system **426** etc. In some embodiments, computer system **400** may store user/application data **424,** such as the data, variables, records, etc. as described in this invention. Such databases may be implemented as fault-tolerant, relational, scalable, secure databases such as Oracle or Sybase.

The operating system **426** may facilitate resource management and operation of the computer system **400.** Examples of operating systems include, without limitation, Apple Macintosh OS X, UNIX, Unix-like system distributions (e.g., Berkeley Software Distribution (BSD), FreeBSD, Net BSD, Open BSD, etc.), Linux distributions (e.g., Red Hat, Ubuntu, KUbuntu, etc.), International Business Machines (IBM) OS/2, Microsoft Windows (XP, Vista/7/8, etc.), Apple iOS, Google Android, Blackberry Operating System (OS), or the like. I/O interface **408** may facilitate display, execution, interaction, manipulation, or operation of program components through textual or graphical facilities. For example, I/O interface **408** may provide computer interaction interface elements on a display system operatively connected to the computer system **400,** such as cursors, icons, check boxes, menus, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer readable medium" should be understood to include tangible items and exclude carrier waves and transient signals, i.e., non-transitory. Examples include Random Access Memory (RAM), Read only Memory (ROM), volatile memory, nonvolatile memory, hard drives, Compact Disc (CD) ROMs, Digital Video Disc (DVDs), flash drives, disks, and any other known physical storage media.

Advantages of embodiments of the present disclosure are summarized in the following paragraphs.

In an embodiment, the present disclosure provides a method of managing a plurality of services in a cloud environment. The method provides an auto-scaling ability, which enables supply of resources to the services.

In an embodiment, the present disclosure provides a fault tolerant system. The system monitors the services for any failures and revives the services.

In another embodiment, the present disclosure allows handling and/or recovery from known issues.

In another embodiment, the present disclosure discloses a system to scale up/ down of resources to provide consistent service and latency to clients.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices, which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for management of a plurality of services in a cloud environment, the method comprising:
receiving, by a cloud monitoring system, a plurality of configurations and rules for the plurality of services in the cloud environment;
initializing, by the cloud monitoring system, at least a collector, based on the plurality of configurations and rules related to the plurality of services, wherein the collector collects run time data of the plurality of services;
comparing, by the cloud monitoring system, runtime data with the plurality of configurations and rules, wherein based on the comparison an event is triggered responsive to a deviation in runtime data with respect to the plurality of configurations and rules; and
determining, by the cloud monitoring device, one or more actuator services corresponding to the triggered event for handling the triggered event.

2. The method of claim 1, wherein the runtime data comprises:
one or more web application metrics of the plurality of services, wherein the one or more web application metrics are selected from a number of instances of plurality of services, a Hyper-Text Transport Protocol throughput, a Hyper-Text Transport Protocol request/response size, and/or a latency; and/or
one or more Java Virtual Machine service metrics of the plurality of services, wherein the one or more Java Virtual Machine service metrics are selected from a heap size, a Central Processing Unit utilization, a memory utilization, and/or a thread count; and/or
one or more application metrics, wherein the one or more application metrics are selected from database connection details, cache details, dependency flags, application exceptions, application logs and/or system logs.

3. The method of claim 1 or claim 2, wherein the plurality of configurations and rules comprise one or more of:
web application configurations and rules, and Java Virtual Machine service configurations and rules, and/or application configurations and rules.

4. The method of any of the preceding claims, wherein the triggered event is one of: a scale-up of resources, a scale-down of resources, an out-of-memory event, and a resource-not-found event, or a service interdependency event.

5. The method of any of the preceding claims, wherein triggering the event comprises:
assessing the deviation in the runtime data by comparing runtime data with plurality of configurations and rules;
triggering a configuration event upon determining a deviation between the runtime data and plurality of configurations; and
triggering a rule event on determining deviation between the runtime data and plurality of rules.

6. The method of any of the preceding claims, wherein the collector collects at least one of the runtime metrics of the at least one of the plurality of services by :
accessing an interface of the collector by an agent associated with the service; and
writing by the agent, the runtime data to the interface.

7. A system for management of a plurality of services in a cloud environment, the system comprising:
a memory having a set of instructions stored therein;
a processor coupled to the memory, wherein the processor is configured to execute the instructions to cause the system to:
receive a plurality of configurations and rules for a plurality of services in the cloud environment;
initialize at least a collector, based on the plurality of configurations and rules related to the plurality of services, wherein the collector is configured to collect runtime data of the plurality of services;
compare runtime data with the plurality of configurations and rules, wherein based on the comparison an event is triggered responsive to a deviation in runtime data with respect to the plurality of configurations and rules; and
determine one or more actuator services corresponding to the triggered event for handling the triggered event.

8. The system of claim 7, wherein the runtime data comprises:
one or more web application metrics of the plurality of services wherein the one or more web application metrics are selected from a number of instances of plurality of services, a Hyper-Text Transport Protocol throughput, a Hyper-Text Transport Protocol request/response size, and/or a latency; and/or
one or more Java Virtual Machine service metrics of the plurality of services wherein the one or more Java Virtual Machine service metrics are selected from a heap size, a Central Processing Unit utilization, a memory utilization, and/or a thread count; and/or
one or more application metrics, wherein the one or more application metrics are selected from database connection details, cache details, dependency flags, application exceptions, application logs and/or system logs.

9. The system of claim 7 or claim 8, wherein the plurality of configurations and rules comprises one or more of: web application configurations and rules, Java Virtual Machine service configurations and rules, and/or application configurations and rules.

10. The system of any of claims 7 to 9, wherein the triggered event is one of: a scale-up of resources, a scale-down of resources, an out-of-memory event, file missing event, a or service interdependency event.

11. The system of any of claims 7 to 10, wherein triggering the event comprises:
assessing the deviation in the runtime data and by comparing with the plurality of configurations and rules;
triggering a configuration event on determining deviation with respect to the plurality of configurations; and
triggering a rule event on determining deviation with respect to plurality rules.

12. The system of any of claims 7 to 11, wherein the collector is configured to collect the runtime data of the at least one of the plurality of services by:
accessing an interface of the collector by an agent associated with the service; and
writing by the agent, the runtime data to the interface.

13. A computer-readable storage medium having stored thereon a set of computer-executable instructions for causing a computer comprising one or more processors to perform the method of any of claims 1 to 6.

14. A computer program product comprising instructions that, when executed by a computer, cause the computer to perform the method of any of claims 1 to 6.
